# EUROPEAN PATENT SPECIFICATION

(11) **EP 0 850 553 B1**
(45) Date of publication and mention of the grant of the patent: **26.03.2003**
(21) Application number: 97203589.3
(22) Date of filing: 14.04.1994
(51) Int. Cl.: A01B 39/14

(54) **A soil supporting member**
Bodenstütze
Support de sol

(30) Priority: 19.04.1993 NL 9300659
(43) Date of publication of application: 01.07.1998
(62) Divisional of application: 94201016.6
(73) Proprietor: MAASLAND N.V., 3155 PD Maasland (NL)
(72) Inventor: Bom, Cornelis Johannes Gerardus, 3181 VC Rozenburg (NL)
(74) Representative: Corten, Maurice Jean F.M.

(56) References cited:
- EP-A- 0 109 724
- AU-B- 523 208
- DE-U- 8 913 171
- FR-A- 2 268 447

## Description

The invention relates to a soil supporting member as defined in the preamble of claim 1 (e.g. see FR-A-2 268 447).

A soil cultivating machine to which the combination can be coupled is generally known, e.g. from the laid open Dutch patent application 87 00 952.

With the machine known from the latter document, the problem exists that cultivated soil after being compressed by the roller disposed behind the machine cannot be handled easily to form ridges.

According to the invention the supporting member is characterized by the features as defined in the characterizing part of claim 1.

With this construction the soil moving members will form ridges and the supporting members are placed in the open furrows so that the soil which is loosened by the cultivating machine is not compressed over the total width of the cultivating machine as is the case with the roller as shown in the Dutch patent application 87 00 952.

The invention will be further explained with reference to the accompanying drawings, in which:
Figure 1 shows a plan view of the machine and the combination of machines in accordance with the invention;
Figure 2 is a side view in the direction of arrow II in figure 1;
Figure 3 shows an enlargement of a portion of Figure 1, and
Figure 4 is a sectional view of a planting bed formed by the machine in accordance with the invention.

Corresponding parts in the drawings are indicated by identical reference numbers. Moreover, the invention is by no means limited to the embodiments depicted and described herein; they serve only to illustrate the inventive idea as defined in the claims.

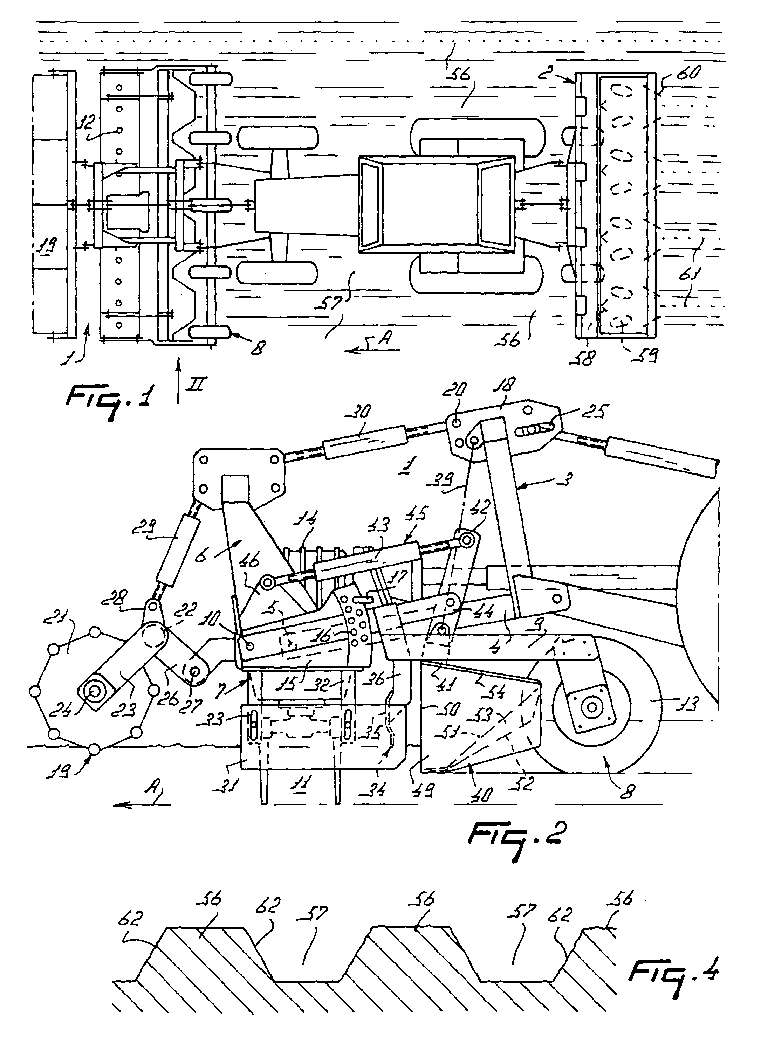

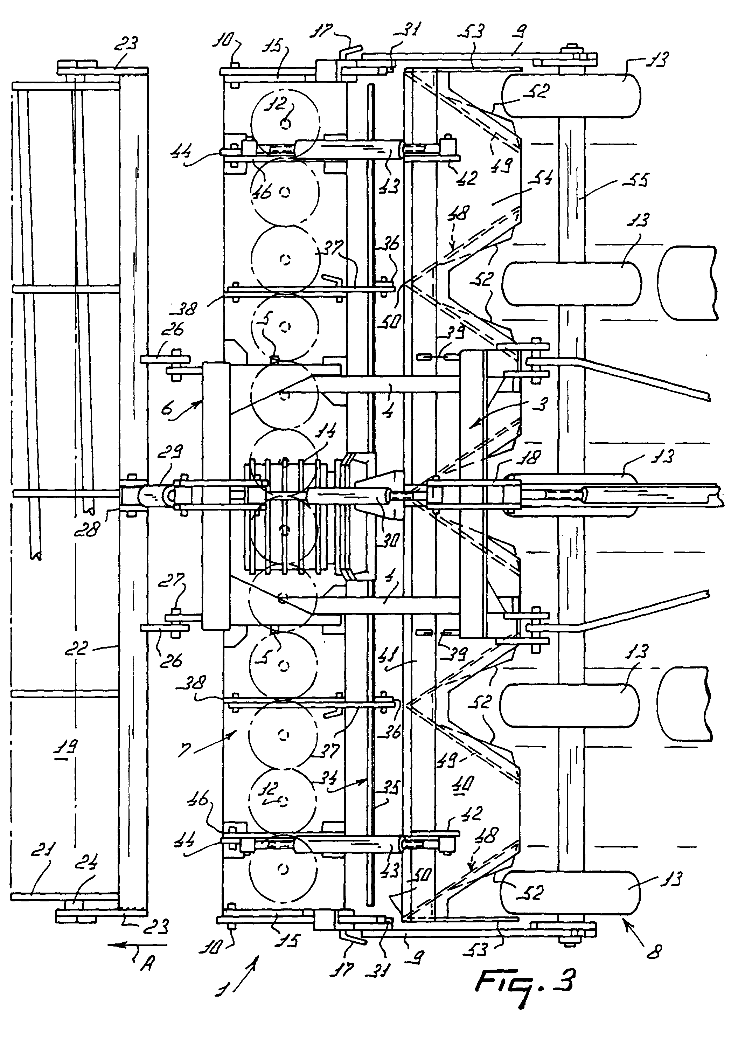

Figure 1 shows a rotary harrow 1 used in combination with a planting arrangement 2 being a potato planter in the present embodiment. As is also shown in Figure 2, the rotary harrow 1 is coupled to the front three-point lifting hitch of a tractor through an intermediate trestle 3.

Near its bottom side, the intermediate trestle 3 comprises a pair of essentially forwardly extending arms 4 which, near their front ends, are pivotably connected, through a hinge pin 5, to the lower side of a trestle 6 fitted on a frame 7 of the soil cultivating machine. The arms 4 are designed as two telescoping parts, although this can not be seen from the drawings. The two parts comprise one or several holes for a locking pin, which enables an arm to be adjusted in length in different positions. The upper pair of lugs 18 provided on the intermediate trestle 3 on behalf of the coupling with the top link of a tractor comprises, according to the invention, a slotted hole 25 in addition to one or several conventional holes 20. Hinge-mounted at both ends, a spacer member 30 adjustable in length, being a screw spindle in the present embodiment, is provided between the upper pair of lugs of the intermediate trestle 3 and that of the trestle 6 for the frame 7. The trestle 6 is provided with points of connection, by means of which it can be included in a known per se three-point hitch. At the rear side relative to the direction of travel A, the rotary harrow comprises a supporting member 8 connected to the frame part 7 through a pair of arms 9 rotating around a pivot 10. In the present embodiment, the supporting member 8 comprises five supporting elements 13 in the shape of wheels. Disposed at a pitch of 75 cms for the present working width amounting to 3 meters, they are mounted on a central carrier 55 which is bearing-mounted on the arms 9.

The rotary harrow 1 is a known per se soil cultivating implement for secondary soil working and, in the present 3 meters wide embodiment, it comprises twelve soil cultivating members 11. The soil cultivating members 11 are bearing-mounted on shafts 12 extending upwards in the frame 7. Within the frame part 7, the shafts 12, and hence the soil cultivating members 11, are in a driving connection with each other through gearwheels provided on the shafts. One of the two central shafts 12 also extends through the top side of the box-like frame 7 to one of two gearwheels being at right angles to, and in mesh with each other in a gearbox 14 provided on the frame. For driving the soil cultivating members 11, the gearbox 14 comprises a short external shaft which is connected to the power-take-off shaft of the tractor through a coupling shaft. The box-like frame 7 is closed at its ends by two upwardly extending cover plates 15. The pivot 10 is disposed on the part of said cover plates 15 projecting upwardly from the frame part 7. The upright plates 15 also serve as guides for the arms 9 of the supporting member 8. The rear portion of the cover and guide plate 15 is provided, near the rear edge, with holes 16, through which a pin 17 is fed, by means of which pin the frame part 7 rests on the arms 9 of the supporting member 8. By relocating the pins 17 in the respective holes 16, the working depth of the soil cultivating members 11 with respect to the supporting member 8 can be changed. For additional support and for stable operation, on the front side of the frame 7 there is provided a second supporting member 19 connected with the trestle 6 through a three-point hitch. To this end, the supporting member 19 comprises a carrier 22 extending parallel to the roller part 21, which carrier is connected on its ends with the shaft 24 of the roller 21 through bearing-mounted arms 23. The supporting member 19 comprises two lower pairs of lugs 26, each of which pairs is connected with the trestle 6 through a pivot 27. Centrally between the pairs of lugs 26, the supporting member 19 comprises a third pair of lugs 28 which is disposed on the carrier 22 at a side facing away from the pairs of lugs 26. A spacer member 29, adjustable in length, in the shape of a screw spindle in the present embodiment, and pivotably mounted on either end, is provided between the third pair of lugs 28 and an upper hitch point of the trestle 6.

Near the lateral ends of the frame part 7 there are disposed plates 31 extending substantially vertically and in the direction of travel by means of a pair of supports 32, which plates 31 are fitted movably in height with respect to the frame part 7 by means of slotted holes 33 provided in the plates 31. For crumbling the soil, the plates 31 work together with an outer soil cultivating member 11 and also function as guides for the soil being worked.

Immediately behind the row of soil cultivating members 11 there is also provided a crumbling and levelling member 34. This member comprises a plate 35 extending essentially vertically and over the width of the frame part 7, the lower part of which plate is folded backward through an angle of approximately 30° along a horizontal folding line. The plate is connected with the frame part 7 through a pair of upwardly extending arms 36 pivotably connected to a pair of arms 37 substantially extending in the direction of travel and being part of a parallelogram construction. Near the front edge of the frame part 7, the arms 37 are pivotably connected with a holder 38 mounted on the frame part. The holder 38 also functions as a guide for the arms 37. The plate 35 is adjustable in height with respect to the soil cultivating members 11 by means of a plurality of holes provided in an arm 36, which holes enable a dowel joint to be made with an arm 37.

According to the invention, a soil moving arrangement 40 is fitted in between the crumbling member 34 and the supporting member 8. It comprises a carrier 41, extending transversely to the direction of travel A, provided with a pair of upwardly extending arms 42, to each of which arms there is pivotably connected an upper arm 43 and a lower arm 44, respectively, belonging to a quadrangular construction 45 approximating a parallelogram. The arms 43 and 44 extend substantially in the direction of travel A and on their front ends they are pivotably connected to an upwardly extending plate 46 which is secured on the frame part 7 with screws. The upper arm of the quadrangular construction 45 comprises a screw spindle, so that the arm 43 is adjustable in length. Soil moving members 48 are attached to the bottom side of the carrier 41. The soil moving members 48 comprise two flat guide plates 49 extending vertically which; in a plan view, are disposed in the shape of a V and at an angle of about 60° with respect to each other, whilst they have a front line of contact or front edge 50 extending vertically. The lower edge of the guide plates 49 extends from the front edge 50 virtually horizontally, i.e. at an angle of between 85° and 90° to the front edge, in sideward and rearward directions. After between 5 and 10 cms from the front edge 50, this lower edge merges into an edge 52 extending obliquely upwards which, viewed from aside, is at an angle of about 30° with a horizontal line. The edge 52 bounds a part of a guide plate which is disposed, in relation to the remaining, greater part of the guide plate 49, on a folding line 51 at a smaller angle to the direction of travel A than that of the remaining part of the plate 49.

As is apparent from Figure 3, each of the outer soil moving members 48 is designed as a soil moving member half. Moreover, near its extremities, the soil moving arrangement 40 is provided with dividing walls 53 extending upwardly and in the direction of travel A. In accordance with the invention, the soil guiding plates 31 and the dividing walls 53 are disposed in alignment.

As is apparent from Figure 3, each of the soil moving members 48 is near its top connected with a neighbouring soil moving member through a connecting plate 54. The connecting plate 54 is to give more rigidity to the soil moving members 48. Between the lower, essentially horizontal edge of the guide plates 49 there is a triangular plate fixed by welding. This plate is a supporting member and it also gives more rigidity to the soil moving arrangement. The soil moving arrangement 40 is connected with the intermediate trestle 3 through two chains disposed on either side of the intermediate trestle 3. Owing to this, the arrangement 40 is movable in an upward direction with respect to the frame 7, e.g. with a view to passing an obstacle in the field. The chain 39, which may be substituted by any similar flexible device, is an easily adjustable device for limiting the working depth of the arrangement 40 with respect to the frame 7 or the soil cultivating members 11. A similar depth setting with a facility for evasive action in an upward direction is obtainable by making the arms 43 or 44 rest on a pin fed through any one out of a plurality of holes in the plate 46.

The sectional view of a field worked by the soil cultivating machine 1 as shown in Figure 4 comprises furrows 57 and ridges 56. According to the invention, the bottom width of a furrow is about 27 cms, whilst the width of the ridge will amount to an average of about 30 cms, with the latter value being dependent on the increase in volume in working the particular soil. The ridge height in Figure 4 is 20 cms.

The arrangement according to the invention, wherein the intermediate trestle 3 is provided with a pair of upper lugs 18 having a borehole 20 as well as a slotted hole 25, presents the possibility of using the machine 1 with and without a rear supporting member 8. In the embodiment including a rear supporting member 8, as depicted in Figures 1 - 3, the top link of a tractor should be coupled to the slotted hole or, otherwise, the upper connection between the tractor and the intermediate trestle 3 should comprise a chain. During operation, the intermediate trestle 3 is then pushed ahead only by the lower lift links of the tractor and, through the lower pair of arms 4 rigidly coupled to the intermediate trestle 3 and through the upper spacer member 30, it passes this pushing force on to the coupling trestle 6 placed on the frame 7. In the present embodiment, the frame part 7 is supported by the soil not only through the soil cultivating members 11 but also through the front supporting member 19 as well as through the rear supporting member 8, whilst the frame part 7 together with the supporting member 19 rigidly connected to said frame part is movable in height with respect to the rear supporting member 8. The arrangement supported both before and behind the soil cultivating members 11 has the advantages of a stable operation and a relatively accurately adjustable and constant working depth of the soil cultivating members 11. In applications of the machine 1, not according to the invention, without a rear supporting member 8, the upper connection between the tractor and the intermediate trestle 3 should comprise a top link coupled to the borehole 20 of the pair of lugs 18. In this situation, the weight of the soil cultivating machine 1 is borne by the front supporting member 19, the soil cultivating members 11 and the lift links of the tractor. The advantage of a machine without a rear supporting member 8 is that the weight of such a machine is lower, which is important e.g. in lifting the machine on the headland. In addition, the machine can be coupled closer to the tractor, which results in that a lower moment on the lift links of the tractor is required to lift the machine. For this coupling closer to the tractor, the tractor, the arms 4 of the intermediate trestle 3 are of a telescopic design and the extensible parts of the arm 4 are lockable in various positions.

According to the invention, the present machine is preferably connected to the front lift links of the tractor, whilst the planter is connected to the rear lift links. After the soil has been worked by the soil cultivating members 11, the soil laid down and levelled is stripwise displaced sidewards by soil moving members 48. Owing to the fact that the soil moving members 48 are disposed at a considerable interspace, ridges 56 are developed which are made up of the loose soil processed and moved sidewards. In the present embodiment, the machine has a 3 m working width on which there are disposed three soil moving members 48 and two half soil moving members in the end positions. They produce four ridges 56 in one operation. The soil moving members 48 are preferably set up such that the reaction forces on the soil being moved are exerted sidewards, but essentially horizontally. This causes that the different soil layers remain in the same position as far as feasible, which means in actual practice that relatively moistier soil from lower levels is not moved upwards, which prevents the occurrence of moisture losses from the seedbed. At the same time it is prevented that the top-layer soil, which is usually dried up by the sun and wind, ends up in the sprout or root zone of the planting material. The horizontal reaction force caused by the disposition of a soil moving member 48 also produces the effect that the soil in the ridges is slightly compressed, which is favourable for the supply of moist from lower layers and which also gives some additional rigidity to the soil ridge 56 formed.

The creation of soil ridges 56 is aimed at protecting the worked soil from excessive compression by the rear supporting member 8 and especially by the wheels 13 of the vehicle bearing and moving the machine, the tractor in this case. Maintaining the loose structure of soil is important, especially for heavy soils. In contrast with that which occurs with relatively light soils, such as sandy soils, the compressed soil can only be loosened with difficulty and, often, in clods too large for the purpose in question. The supporting elements 13 of the rear supporting member 8 are therefore positioned in relation to the central carrier 55 such that each of them is borne by the soil in an open furrow 57. The furrows 57 made by the soil moving members 48 constitute favourable ruts for the wheels of the tractor to be used, which tractor may be provided with several narrow tyres disposed at a certain mutual distance. Though in Figure 2 the soil moving members are shown in a feasible position for a working depth amounting to about half that of the soil cultivating members 11, the preferable depth at which the soil moving members 48 operate is the same as the working depth of the soil cultivating members 11. It will be clear from the above that the inventive idea manifests itself best in the latter position.

As shown in Figure 3, the invention also comprises the combination of the soil cultivating machine 1 with a planting arrangement 2. The planting arrangement comprises furrow openers 58 disposed centrally on the width of the ridges for a relatively narrow furrow in which seed material 61 is deposited. When tubers are involved, the furrow depth corresponds with twice the average tuber thickness. Immediately behind the furrow opener there are provided a first pair of backfilling members which feed the soil moved aside by the furrow opener back into the furrow and then cover the seed material already deposited. These backfilling members operate on the top side of a ridge.

According to the invention, on the rear side of each of the backfilling members there is provided a pair of ridging-up members which operate on the sides 62 of a ridge 56. The ridging-up members are meant for repairing the shape of ridges disturbed by the furrow openers, and they are also suitable for realizing an actual sowing depth of twice the average potato tuber thickness in the event that high potato ridges are required. In the latter case, it is in the nature of things that the furrow openers are set to work less deep in the ridges. According to the invention, a potato planter is furthermore preferably supported by a wheel 13 in each furrow and the wheels are adjustable in height with respect to the planting arrangement, so that at different ridge heights the planting arrangement is capable of operating suitably in conjunction with the soil cultivating arrangement according to the invention as previously described.

## Claims

1. A soil supporting member working together with a soil moving arrangement (40) including soil moving members (48) for moving sideways the soil from a soil layer worked by soil cultivating members and for forming ridges, which soil supporting member is coupled through arms (9) to a soil cultivating machine (1) having a frame and at least one row of soil cultivating members (11) which extends transversely to the operating direction of travel of the machine, the arrangement being such that the soil moving arrangement (40) including soil moving members (48) for moving sideways the soil from a soil layer worked by the soil cultivating members and for forming ridges is arranged between said supporting arrangement (8) and the soil cultivating members (11), wherein the soil supporting member (8) comprises a number of supporting elements (13), such as wheels, mounted on a central carrier (55) mounted on the arms (9), arranged such that they can be borne by the soil in open furrows (57) made by soil moving members (48) of the soil moving arrangement (40), **characterized in that** the supporting elements (13) are placed at equal distances from one another, and located between said arms (9).

2. A soil supporting member as claimed in claim 1, **characterized in that** the supporting elements (13) are arranged on a common carrier (55).

3. A soil supporting member as claimed in claim 2, **characterized in that** the common carrier (55) forms the rotational axis for the arrangement.

4. A soil supporting member as claimed in any one of the preceding claims, **characterized in that** the supporting arrangement (8) comprises at least three, preferably five, supporting elements (13).

5. A soil supporting member as claimed in any one of the preceding claims, **characterized in that** the supporting elements (13) are in the shape of wheels.

6. A soil supporting member as claimed in any one of the preceding claims, wherein for a working width of 3 meters of the soil supporting member (8), the supporting elements (13) have a pitch of 75 cms.

7. A soil supporting member as claimed in any one of the preceding claims, **characterized in that** the soil supporting member (8) is provided with arms (9) extending in the direction of movement A, which are coupled to the soil cultivating machine (1).

8. A combination as claimed in claim 7, **characterized in that** the arms (9) of the soil supporting member (8) carry the central carrier (55) on which the supporting members (13) are mounted.

9. A soil supporting member as claimed in any one of the preceding claims, **characterized in that** the soil moving arrangement (40) with which the soil supporting member (8) is co-operating comprises guide plates (49) for moving worked soil into ridges (56), disposed pair-wise in V-shape as seen from above.

10. A soil supporting member as claimed in claim 9, **characterized in that** the lower edge of said guide plates (48) extend from the front edge (50) of said V-shape virtually horizontally before merging into an obliquely upwards extending edge (51, 52).

## Patentansprüche

1. Bodenstützglied, das mit einer Bodenbewegungsvorrichtung (40) zusammenwirkt, die Bodenbewegungsglieder (48) enthält, um den Boden von einer von den Bodenbearbeitungsgliedern bearbeiteten Bodenschicht seitwärts zu bewegen und Dämme zu bilden, wobei das Bodenstützglied durch Arme (9) mit einer Bodenbearbeitungsmaschine (1) verbunden ist, die einen Rahmen und mindestens eine sich quer zur Arbeitsrichtung der Maschine erstreckende Reihe von Bodenbearbeitungsgliedern (11) aufweist, wobei die Anordnung so getroffen ist, daß die Bodenbewegungsvorrichtung (40), die Bodenbewegungsglieder (48) enthält, um den Boden von einer von den Bodenbearbeitungsgliedern bearbeiteten Bodenschicht seitwärts zu bewegen und Dämme zu bilden, zwischen der Stützvorrichtung (8) und den Bodenbearbeitungsgliedern (11) angeordnet ist, wobei das Bodenstützglied (8) eine Anzahl von Stützelementen (13), wie z. B. Räder, umfaßt, die an einem mittleren Träger (55) angebracht sind, der an den Armen (9) befestigt ist, wobei die Stützelemente derart angeordnet sind, daß sie von dem Boden in offenen Furchen (57), die von den Bodenbewegungsgliedern (48) der Bodenbewegungsvorrichtung (40) gebildet worden sind, getragen werden können,
**dadurch gekennzeichnet, daß** die Stützelemente (13) in gleichen Abständen voneinander angeordnet und zwischen den Armen (9) angebracht sind.

2. Bodenstützglied nach Anspruch 1,
**dadurch gekennzeichnet, daß** die Stützelemente (13) an einem gemeinsamen Träger (55) angeordnet sind.

3. Bodenstützglied nach Anspruch 2,
**dadurch gekennzeichnet, daß** der gemeinsame Träger (55) die Drehachse der Anordnung bildet.

4. Bodenstützglied nach einem der vorhergehenden Ansprüche,
**dadurch gekennzeichnet, daß** die Stützvorrichtung (8) mindestens drei, vorzugsweise fünf Stützelemente (13) umfaßt.

5. Bodenstützglied nach einem der vorhergehenden Ansprüche,
**dadurch gekennzeichnet, daß** die Stützelemente (13) die Form von Rädern haben.

6. Bodenstützglied nach einem der vorhergehenden Ansprüche,
bei dem die Stützelemente (13) bei einer Arbeitsbreite von 3 Metern des Bodenstützgliedes (8) einen Abstand von 75 cm haben.

7. Bodenstützglied nach einem der vorhergehenden Ansprüche,
**dadurch gekennzeichnet, daß** das Bodenstützglied (8) mit sich in Arbeitsrichtung A erstreckenden Armen (9) versehen ist, die mit der Bodenbearbeitungsmaschine (1) verbunden sind.

8. Kombination nach Anspruch 7,
**dadurch gekennzeichnet, daß** die Arme (9) des Bodenstützgliedes (8) den mittleren Träger (55) tragen, an dem die Stützelemente (13) angebracht sind.

9. Bodenstützglied nach einem der vorhergehenden Ansprüche,
**dadurch gekennzeichnet, daß** die Bodenbewegungsvorrichtung (40), mit der das Bodenstützglied (8) zusammenwirkt, zum Bewegen von bearbeitetem Boden zur Bildung von Dämmen (56) Führungsplatten (49) aufweist, die in der Draufsicht paarweise in V-Form angeordnet sind.

10. Bodenstützglied nach Anspruch 9,
**dadurch gekennzeichnet, daß** sich die Unterkante der Führungsplatten (48) von der Vorderkante (50) der V-Form praktisch in horizontaler Richtung erstreckt, bevor sie in eine schräg nach oben verlaufende Kante (51, 52) übergeht.

## Revendications

1. Elément de support de sol fonctionnant avec un dispositif de déplacement de sol (40) comprenant des éléments de déplacement de sol (48) pour déplacer le sol latéralement à partir d'une couche de sol travaillée par les éléments pour cultiver le sol et pour former des billons, dont l'élément de support de sol est couplé par des bras (9) à une machine pour cultiver le sol (1) dotée d'un châssis et d'au moins une rangée d'éléments pour cultiver le sol (11) qui s'étend transversalement par rapport à la direction de fonctionnement du déplacement de la machine, le dispositif étant tel que le dispositif de déplacement de sol (40) comprenant des éléments de déplacement de sol (48) pour déplacer latéralement le sol à partir d'une couche de sol travaillée par les éléments pour cultiver le sol et pour former des billons, est disposé entre ledit dispositif de support (8) et les éléments pour cultiver le sol (11), dans lequel l'élément de support de sol (8) comprend un certain nombre d'éléments de support (13) tels que des roues, montées sur un support central (55) monté sur les bras (9) disposés de sorte qu'ils peuvent être supportés par le sol en sillons ouverts (57) effectués par les éléments de déplacement de sol (48) du dispositif de déplacement de sol (40), **caractérisé en ce que** les éléments de support (13) sont placés à distances égales entre eux, et situés entre lesdits bras (9).

2. Elément de support de sol selon la revendication 1, **caractérisé en ce que** les éléments de support (13) sont disposés sur un support commun (55).

3. Elément de support de sol selon la revendication 2, **caractérisé en ce que** le support commun (55) forme l'axe de rotation pour le dispositif.

4. Elément de support de sol selon l'une quelconque des revendications précédentes, **caractérisé en ce que** le dispositif de support (8) comprend au moins trois, de préférence cinq éléments de support (13).

5. Elément de support de sol selon l'une quelconque des revendications précédentes, **caractérisé en ce que** les éléments de support (13) ont la forme de roues.

6. Elément de support de sol selon l'une quelconque des revendications précédentes, dans lequel pour une largeur de travail de 3 mètres de l'élément de support de sol (8), les éléments de support (13) ont un pas de 75 cm.

7. Elément de support de sol selon l'une quelconque des revendications précédentes, **caractérisé en ce que** l'élément de support de sol (8) est prévu avec des bras (9) s'étendant dans la direction du mouvement A, qui sont couplés à la machine pour cultiver le sol (1).

8. Combinaison selon la revendication 7, **caractérisée en ce que** les bras (9) de l'élément de support de sol (8) supportent le support central (55) sur lequel les éléments de support (13) sont montés.

9. Elément de support de sol selon l'une quelconque des revendications précédentes, **caractérisé en ce que** le dispositif de déplacement de sol (40) avec lequel l'élément de support de sol (8) coopère, comprend des plaques de guidage (49) pour déplacer le sol travaillé dans des billons (56), disposés par paire en forme de V comme décrit ci-dessus.

10. Elément de support de sol selon la revendication 9, **caractérisé en ce que** le bord inférieur desdites plaques de guidage (48) s'étend à partir du bord avant (50) de ladite forme en V virtuellement à l'horizontale avant de se confondre dans un bord s'étendant obliquement vers le haut (51, 52).
